Europäisches Patentamt

European Patent Office

Office européen des brevets

(11) Veröffentlichungsnummer: **0 490 194 A1**

## (12) EUROPÄISCHE PATENTANMELDUNG

(21) Anmeldenummer: **91120567.2**

(22) Anmeldetag: **29.11.91**

(51) Int. Cl.5: **F16B 39/30, B21H 3/02**

(30) Priorität: **10.12.90 DE 4039402**

(43) Veröffentlichungstag der Anmeldung:
**17.06.92 Patentblatt 92/25**

(84) Benannte Vertragsstaaten:
**DE ES FR GB NL**

(71) Anmelder: **ITW-ATECO GmbH**
**Stormarnstrasse 43-45**
**W-2000 Norderstedt 1(DE)**

(72) Erfinder: **Isenberg, Rainer**
**Schattweg 16**
**W-5860 Iserlohn 7(DE)**
Erfinder: **Hoffmann, Wolfgang**
**Goethestrasse 28**
**W-5860 Iserlohn(DE)**

(74) Vertreter: **Dipl.-Ing. H. Hauck Dipl.-Ing. E.**
**Graalfs Dipl.-Ing. W. Wehnert Dr.-Ing. W.**
**Döring**
**Neuer Wall 41**
**W-2000 Hamburg 36(DE)**

(54) **Schraube mit selbstsicherndem Gewinde.**

(57) Schraube mit selbstsicherndem Gewinde (14), wobei mindestens eine Gewindeflanke (18) des mit einem Muttergewinde in Eingriff befindlichen Bereiches über eine begrenzte Umfangslänge einen axial versetzten Abschnitt (20) aufweist.

FIG.2

Schrauben, die in ein vorhandenes Muttergewinde eingeschraubt werden, können sich lösen, insbesondere wenn Erschütterungen auf die Schraubverbindung wirken. Dies ist z.B. der Fall bei Maschinenschrauben, die auf Erschütterungen erleidenden Teilen angeordnet sind, beispielsweise bei Automobilen. Das ungewollte Selbstlösen wird durch eine Relativbewegung verursacht, da das Gewinde normalerweise nicht absolut spielfrei hergestellt werden kann bzw. darf. Ein ungewolltes Lösen einer Schraube ist nicht nur lästig, sondern häufig auch mit Gefahren verbunden. Es bestehen daher viele konstruktive Vorschläge, ein ungewolltes Losdrehen von Schrauben zu verhindern. Eine Gruppe von Sicherungsmitteln sieht Elemente am Schraubenkopf oder unterhalb des Schraubenkopfes im oberen Bereich des Schaftes vor, welche eine Hemmung zwischen Kopf und/oder Schaft einerseits und dem Werkstück andererseits erzeugen. Abgesehen davon, daß diese Sicherungsmittel häufig unzureichend sind, erfordern sie einen zusätzlichen Fertigungsaufwand. Eine andere Gruppe bezieht sich auf die Formgebung des Gewindes selbst, durch welche ein fester Sitz der Schraube im Muttergewinde erreicht werden soll. Derartige konstruktive Maßnahmen an einem Schraubengewinde erfordern jedoch zumeist einen hohen Herstellungaufwand.

Der Erfindung liegt die Aufgabe zugrunde, eine Schraube mit selbstsicherndem Gewinde zu schaffen, die einfach herstellbar ist und eine Relativbewegung in einer Schraubverbindung sicher verhindert.

Diese Aufgabe wird durch die Merkmale des Kennzeichnungsteils des Patentanspruches 1 gelöst.

Die Erfindung gehört zur oben zuletzt erwähnten Kategorie. Das Gewinde weist in mindestens einer Gewindeflanke des mit einem Muttergewinde in Eingriff befindlichen Bereiches einen über eine begrenzte Umfangslänge sich erstreckenden axial versetzten Abschnitt auf. Vorzugsweise sind mehrere Gewindeflanken mit axial versetzten Abschnitten versehen, die gegenseitig in Umfangsrichtung versetzt sein können. Vorzugsweise sind die axial versetzten Flankenabschnitte mehrerer Windungen in einer Reihe angeordnet, vorzugsweise parallel zur Schraubenachse. Vorzugsweise erstreckt sich der die axial versetzten Flankenabschnitte aufweisende Sicherheitsbereich über die gesamte Schraubenlänge. Bei in Reihe angeordneten axial versetzten Flankenabschnitten können diese über den Umfang die gleiche Umfangslänge aufweisen. Vorzugsweise kann die Umfangslänge der axial versetzten Flankenabschnitte von der Schraubenspitze zum Schraubenkopf allmählich zunehmen.

Beim Einsatz der erfindungsgemäßen Schraube in ein vorhandenes Muttergewinde wird durch den Versatz der Gewindeflanke am Schraubengewinde Umformarbeit geleistet, so daß ein spielfreies Gewinde erzeugt und somit eine Relativbewegung in der Schraubverbindung verhindert wird. Ist eine Relativbewegung nicht mehr möglich, kann es auch nicht mehr zum ungewollten Lösen der Verbindung kommen.

Nach einer weiteren Ausgestaltung der Erfindung kann sich der axial versetzte Flankenabschnitt über 1/4 bis 1/5 des Schraubenumfanges erstrekken. Grundsätzlich ist es auch möglich, pro Windung mehr als einen axial versetzten Flankenabschnitt vorzusehen, z.B. zwei oder drei, die im Umfangsabstand angeordnet sind und dementsprechend eine geringere Umfangslänge haben als z.B. ein einziger axial versetzter Flankenabschnitt. Ein derartiges Gewinde läßt sich jedoch schwerer herstellen.

Der axiale Versatz der Gewindeflanke muß ein Minimum aufweisen, damit die angestrebte Verformungsarbeit erreicht wird. Andererseits darf er nicht zu groß sein, da sonst der Kraftaufwand zum Eindrehen der Schraube in das Muttergewinde zu hoch wird. Ein zu großer Versatz erhöht das Schraubmoment unzulässig, während das Vorspannmoment verkleinert wird. Nach einer Ausgestaltung der Erfindung beträgt das Versatzmaß 15 bis 50 % der Gewindesteigung. Ein Versatzmaß über 50 % ist aus den erwähnten Gründen unzweckmäßig.

Die erfindungsgemäße Schraube weist zweckmäßigerweise ein im übrigen voll profiliertes Gewinde auf, wobei der die versetzten Flanken aufweisende Sicherungsbereich eine wesentliche Änderung des Gewindeprofils nicht bewirkt.

Die erfindungsgemäße Schraube kann mit Hilfe herkömmlicher Walzbacken hergestellt werden. Ein erfindungsgemäßes Verfahren sieht vor, daß zunächst eine Gewindewalzbacke mit dem Formprofil für das Schraubgewinde ohne versetzte Flankenabschnitte hergestellt wird, wobei anschließend ein von der Größe eines die versetzten Abschnitte aufweisenden Sicherungsabschnitts der Walzbacke annähernd senkrecht zu den Gewindeflanken um das Versatzmaß relativ verschoben und anschließend das Schraubgewinde geformt wird. Mit dem versetzten Abschnitt der Walzbacke wird beim Gewindewalzen der Sicherungsbereich geformt. Die Walzbacke zur Durchführung des Verfahrens weist nach einer weiteren Ausgestaltung der Erfindung mindestens einen Einsatz auf, der passend von einer Ausnehmung der Walzbacke aufnehmbar ist und der annähernd senkrecht zu den Gewindeflanken verschiebbar ist. Es können Mittel vorgesehen werden zur mindestens einendigen Festlegung des Einsates nach dem Versetzen in der Walzbacke vor dem Formen des Schraubgewindes.

Die Erfindung wird nachfolgend anhand von Zeichnungen näher erläutert.

Fig. 1 zeigt eine Schraube in einem Sicherungsbereich nach der Erfindung in Seitenansicht.

Fig. 2 zeigt perspektivisch einen Teil des Schraubgewindes der Schraube nach Fig. 1 in einem Teil des Sicherungsbereiches.

Fig. 3 zeigt eine Draufsicht auf eine abgewickelte Gewindewalzbacke zur Herstellung des Gewindes nach Fig. 2.

Fig. 4 zeigt eine Seitenansicht der abgewikkelten Walzbacke nach Fig. 3 in Richtung Pfeil 4.

Fig. 5 zeigt einen Schnitt durch die abgewikkelte Walzbacke nach Fig. 3 entlang der Linie V-V.

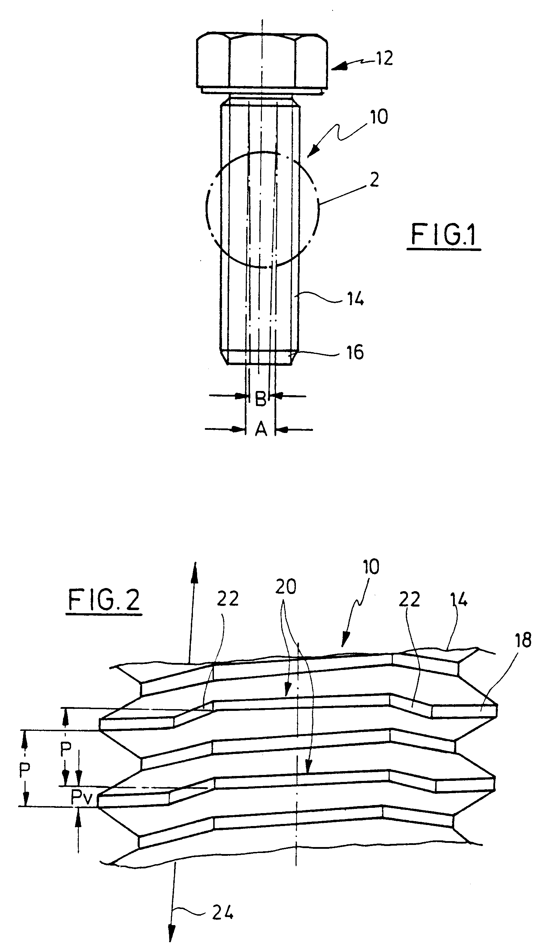

Eine Schraube nach Fig. 1 weist einen Schaft 10 und einen Sechskantkopf 12 auf. Der Schaft 10 besitzt ein Gewinde 14, beispielsweise ein übliches metrisches Gewinde, das voll profiliert auch im Schaft geformt ist. Das freie Ende des Schaftes 10 besitzt einen konischen Abschnitt 16. Der mit dem strichpunktierten Kreis 2 umrandete Bereich ist in Fig. 2 perspektivisch dargestellt. Man erkennt, daß die Flanken 18 des Gewindes 14 in einem Umfangsbereich verformt sind, wie bei 20 zu erkennen. Die Verformung 20 besteht in einem axialen Versatz Pv der Flanken 18 um einen bestimmten Betrag, wobei Pv 15 bis 50 % der Steigung P des Gewindes 14 betragen kann. Zwischen den Übergangsabschnitten 22 verlaufen die axial versetzten Abschnitte 20 wie die Flanken des übrigen Gewindes 14, nur um den erwähnten axialen Versatz verschoben. Die Erstreckung der Abschnitte 20 in Umfangsrichtung der Schraube kann 1/4 bis 1/5 des Umfanges betragen. Die axial versetzten Abschnitte 20 können sich über das gesamte Gewinde erstrecken, wie in Fig. 1 angedeutet. In Fig. 1 sind zwei Möglichkeiten für die Ausbildung eines Sicherungsbereiches, der aus einer Reihe axial versetzter Flankenabschnitte besteht, gezeigt. Bei der ersten Ausführung A sind alle axial versetzten Flankenabschnitte 20 von gleicher Länge, und der Sicherungsbereich erstreckt sich parallel zur Schraubenachse. Bei der Ausführung B erstreckt sich die Reihe der Flankenabschnitte ebenfalls achsparallel, die Länge wird jedoch in Richtung Schraubenkopf 12 allmählich größer (Keilform).

Bei einem Einschrauben einer Schraube 10 in Schraubrichtung 24 (Fig. 2) leistet das Muttergewinde Verformungsarbeit und verformt die axial versetzten Abschnitte 20 zurück, so daß sich ein spielfreier Sitz ergibt. Der Versatz der Steigungen ergibt Pv, das nicht zu groß sein darf, da sonst das Einschraubmoment zu hoch wird.

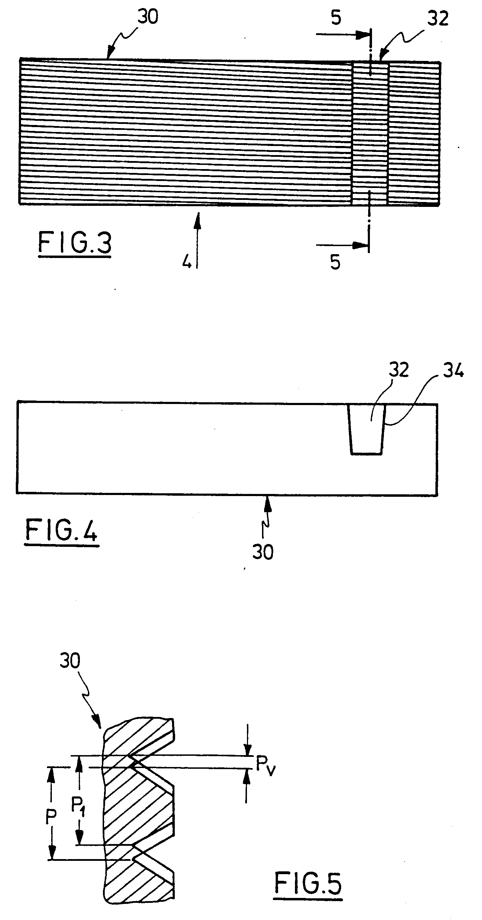

In den Fig. 3 bis 5 ist eine Walzbacke 30 dargestellt, mit der das Gewinde 14 geformt werden kann. Die Walzbacke 30 ist in üblicher Weise hergestellt. Sie weist indessen einen Einsatz 32 auf, der leicht keilförmig im Querschnitt geformt sein kann (Fig. 4), der in einer entsprechend geformten Ausnehmung 34 aufgenommen ist. Das Formgewinde der Walzbacke 30 wird in üblicher Weise hergestellt, wobei das Gewinde in gleicher Weise im Einsatz 32 gleichzeitig mitgeformt wird. Anschließend wird der Einsatz um den Betrag Pv verschoben und vorzugsweise nur an einem Ende festgelegt (nicht gezeigt). Danach erfolgt das Walzen des Gewindes 14, so daß sich bei der Walzbacke 30 das Gewinde 14 in der Ausführung A ergibt. In Fig. 3 ist der Zustand der Walzbacke 30 nach der Verschiebung des Einsatzes 32 dargestellt. Dies ergibt sich auch aus dem Schnittbild nach Fig. 5.

**Patentansprüche**

1. Schraube mit selbstsicherndem Gewinde, dadurch gekennzeichnet, daß mindestens eine Gewindeflanke (18) des mit einem Muttergewinde in Eingriff befindlichen Bereiches über eine begrenzte Umfangslänge einen axial versetzten Abschnitt (20) aufweist.

2. Schraube nach Anspruch 1, dadurch gekennzeichnet, daß sich der axial versetzte Flankenabschnitt (20) über 1/4 bis 1/5 des Schraubenumfanges erstreckt.

3. Schraube nach Anspruch 1 oder 2, dadurch gekennzeichnet, daß axial versetzte Flankenabschnitte (20) mehrerer Windungen in einer Reihe (AB) angeordnet sind, vorzugsweise parallel zur Schraubenachse.

4. Schraube nach Anspruch 3, dadurch gekennzeichnet, daß die Umfangslänge der axial versetzten Flankenabschnitte (20) annähernd gleich ist.

5. Schraube nach Anspruch 3, dadurch gekennzeichnet, daß die Länge der axial versetzten Flankenabschnitte von der Schraubenspitze (16) zum Schraubenkopf (12) allmählich zunimmt.

6. Schraube nach einem der Ansprüche 1 bis 5, dadurch gekennzeichnet, daß das Versatzmaß (Pv) 15 bis 50 % der Gewindesteigung (P) beträgt.

7. Schraube nach einem der Ansprüche 1 bis 6, dadurch gekennzeichnet, daß sie ein voll profiliertes Gewinde aufweist.

8. Verfahren zur Herstellung einer Schraube nach einem der Ansprüche 1 bis 7, dadurch gekennzeichnet, daß zunächst eine Gewindewalzbacke mit dem Formprofil für das Schraubengewinde ohne versetzte Flankenabschnitte hergestellt wird, anschließend ein von der Größe eines die versetzten Flankenabschnitte aufweisenden Sicherungsbereichabschnitts der Walzbacke annähernd senkrecht zu den Gewindeflanken um das Versatzmaß relativ verschoben und danach das Schraubengewinde geformt wird.

9. Walzbacke zur Durchführung des Verfahrens nach Anspruch 8, dadurch gekennzeichnet, daß die Walzbacke (30) mindestens einen Einsatz (32) aufweist, der passend von einer Ausnehmung (34) der Walzbacke (30) aufgenommen ist und der annähernd senkrecht zu den Gewindeflanken verschiebbar ist und Mittel vorgesehen sind zur mindestens einendigen Festlegung des Einsatzes (32) nach dem Verschieben in der Walzbacke (30) und vor dem Formen des Schraubengewindes.

FIG.1

FIG.2

FIG.3

FIG.4

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CH-A-471 978 (RUSSELL, BURDSALL & WARD BOLT AND NUT CO.) | 1-4,6,7 | F16B39/30 |
| Y | * Spalte 3, Zeile 32 - Spalte 7, Zeile 5; Abbildungen * | 8,9 | B21H3/02 |
| | --- | | |
| Y | US-A-3 481 380 (ARTHUR R. BREED) | 8,9 | |
| | * Spalte 3, Zeile 20 - Spalte 6, Zeile 75; Abbildungen * | | |
| | --- | | |
| X | DE-A-3 804 291 (RICHARD BERGNER GMBH) | 1-4 | |
| | * das ganze Dokument * | | |
| | --- | | |
| Y | US-A-3 452 375 (ERIC G. GABBEY) | 8,9 | |
| A | * das ganze Dokument * | 1-4 | |
| | --- | | |
| A | LU-A-67 373 (RANDOLPH BUCKLEY) | | |
| | ----- | | |

**RECHERCHIERTE SACHGEBIETE (Int. Cl.5)**

F16B
B21H

Der vorliegende Recherchenbericht wurde für alle Patentansprüche erstellt

| Recherchenort | Abschlußdatum der Recherche | Prüfer |
|---|---|---|
| DEN HAAG | 31 MAERZ 1992 | ARESO Y SALINAS |